# EUROPEAN PATENT APPLICATION

(11) **EP 3 255 386 A1**
(43) Date of publication of application: **13.12.2017**
(21) Application number: 17166676.1
(22) Date of filing: 13.04.2017
(51) Int. Cl.: G01D 5/347, G01D 5/245

(54) **ABSOLUTE ENCODER OF TUBULAR MOTOR**

(30) Priority: 12.06.2016 CN 201610410947
(71) Applicant: Zhejiang Huzhou SCVE Machine & Motor Co., Ltd, Huzhou, Zhejiang 313100 (CN)
(72) Inventor: Chen, Bin, Huzhou, Zhejiang 313100 (CN)
(74) Representative: 2s-ip Schramm Schneider Bertagnoll Patent- und Rechtsanwälte Part mbB

(57) **Abstract**

The disclosure relates to the absolute encoder of tubular motor, which solves the shortcoming of poor use performance of the tubular motor caused by the reason that the specific position of a roller shutter door or window cannot be sensed by measuring the operational state of the tubular motor in the operation of the tubular motor in existing technologies. According to the absolute encoder of tubular motor provided by the disclosure, an input shaft (1) drives through a speed variation device (2) a power shaft (5) to rotate; a code disc (6) is arranged on the power shaft (5); a sensing part is arranged on the code disc (6); a sensor (7) which is matched with the sensing part for collecting signals is arranged on a substrate (4); when a component which is driven by the tubular motor moves from one limiting position to another, the power shaft (5) rotates for one circle; the code disc (6) positioned on the power shaft (5) and the power shaft (5) rotate synchronously; and the travel of the component which is driven by the tubular motor is divided into a plurality of nodes by the code disc (6), so that the specific position of the component which is driven by the tubular motor can be sensed conveniently through the code disc (6) in the operation of the tubular motor, and the usability of the tubular motor is optimized.

## Description

### TECHNICAL FIELD

The disclosure relates to accessories of tubular motors, and particularly to an absolute encoder of tubular motor.

### BACKGROUD

Tubular motors are widely applied to driving machines of roller shutter doors or windows to realize the automatic rising/lowering function of them.

The tubular motors in existing technologies have a simple structure; the rising and lowering function of the roller shutter doors or windows are both controlled through a travel switch, that is, after the door or the window is completely opened or closed, the travel switch is triggered to control the start or stop of the tubular motor; this control mode is very inconvenient in use, for example, if the power off suddenly happened when the door or the window is not completely opened or closed, control device of the tubular motor cannot sense the correct position of the door or window, consequently, when the power is on, error actions of the tubular motor occur.

Thus, the usability of the tubular motor is influenced by the reason that the specific position of the roller shutter door or window cannot be sensed by measuring the state of the tubular motor in the operation in existing technologies.

### SUMMARY

The disclosure provides an absolute encoder of tubular motor, which aims to solve the shortcoming of poor use performance of the tubular motor caused by the reason that the specific position of the roller shutter door or window cannot be sensed by measuring the state of the tubular motor in the operation in existing technologies.

In order to solve the above technical problem, the disclosure adopts a technical scheme as follows. An absolute encoder of tubular motor includes an input shaft, a speed variation device, an encoding device and a substrate, wherein the encoding device includes a power shaft and a code disc arranged on the power shaft, the input shaft transmits power to the power shaft after experiencing the speed variation by the speed variation device, supposing the input shaft needs to rotate for n circles when an apparatus which is driven by the input shaft moves from one limiting position to another, the speed variation device makes the transmission ratio of the input shaft to the power shaft be n:1; each code disc arranged on the power shaft is provided with a respective number of sensing parts, and, after all code discs are fixed on the power shaft, each code disc is arranged in an ascending or descending order according to the number of sensing parts on the code disc based on a formula a=x^{y}, where a is the number of the sensing parts on the code disc, x is an integer greater than or equal to 2, y is an integer greater than or equal to 1; and a sensor which is matched with the sensing part for collecting a signal is arranged at each position on the substrate corresponding to each code disc.

In the above technical scheme, the input shaft is connected with the tubular motor and rotates along with the rotation of the tubular motor, the input shaft drives the power shaft to rotate through the speed variation device, moreover, the transmission ratio of the input shaft to the power shaft is n: 1, the code disc is arranged on the power shaft, the sensing part is arranged on the code disc, and the sensor is arranged on the substrate; when the tubular motor drives a roller shutter door or window to move from one limiting position to another, the input shaft rotates for n circles, the power shaft rotates for one circle and the code disc on the power shaft also rotates for one circle; when the roller shutter door or window moves to different positions, the sensor can collect all the specific positions of the roller shutter door or window through the sensing part on the code disc, so that the encoder can sense the specific position of the door or window, the usability of the tubular motor is optimized, and thus the usability of the roller shutter door or window is optimized.

As an optional scheme, the speed variation device is a gear variator, and a drive wheel which is engaged with a gear of the gear variator is arranged on the input shaft. The gear variator has low noise and accurate transmission ratio, thus improving the precision of the encoder.

As an optional scheme, the speed variation device includes an intermediate shaft driven by the input shaft, a disc body which is provided with a sensing body is arranged on the intermediate shaft, and a sensing device which is matched with the sensing body for collecting a rotation state of the intermediate shaft is arranged at a position on the substrate corresponding to the disc body. The sensing device matched with the sensing body may collect the rotation direction and rotation speed of the intermediate shaft and whether the intermediate shaft rotates at a constant speed, thereby sensing the rotation direction and rotation speed of the tubular motor and whether the tubular motor rotates at a constant speed, so that the error action of the tubular motor is avoided and the service life of the tubular motor is prolonged.

As an optional scheme, a groove which is recessed into the code disc along the radial direction of the code disc is opened on the code disc, the groove runs through the code disc along the axial direction of the code disc, and the sensing part is the groove which is arranged on the code disc and a protrusion which is positioned on the code disc relative to the groove. The code disc has simple structure and high precision, and optimizes the usability of the encoder.

As an optional scheme, the sensing part is a sensing block stuck on the code disc. The structure of the code disc is simplified and the manufacturing cost of the code disc is reduced.

As an optional scheme, at least two sensing bodies are arranged on the disc body. The sensing precision of the sensing device is improved.

As an optional scheme, the sensing body is a sensing sheet stuck on the disc body; the structure of the disc body is simplified and the manufacturing cost of the disc body is reduced; or, a groove body which is recessed into the disc body along the radial direction of the disc body is opened on the disc body, the groove body runs through the disc body along the axial direction of the disc body, and the sensing body is the groove body which is arranged on the disc body and a protrusion which is positioned on the disc body relative to the groove body. The sensing precision of the sensing device is improved.

As an optional scheme, five code discs are arranged on the power shaft, and, after all code discs are mounted on the power shaft, the number of sensing parts on each code disc is 2, 4, 8, 16 and 32 in turn. The travel of a component which is driven by the tubular motor is divided into a plurality of nodes, so that the component which is driven by the tubular motor can be sensed on any node and the usability of the encoder is optimized.

As an optional scheme, six sensing bodies are arranged on the disc body. The sensing precision of the sensing device is improved.

As an optional scheme, a lug which supports the intermediate shaft is arranged on the substrate, and a convex plate which supports the power shaft is further fixed on the substrate. The intermediate shaft and the power shaft are firmly secured and the stability of the encoder is optimized.

Compared with existing technologies, the absolute encoder of a tubular motor provided by the disclosure has benefits as follows: the input shaft drives through the speed variation device the power shaft to rotate; the code disc is arranged on the power shaft; the sensing part is arranged on the code disc; the sensor which is matched with the sensing part for collecting signals is arranged on the substrate; when the component which is driven by the tubular motor moves from one limiting position to another, the power shaft rotates for one circle; the code disc positioned on the power shaft and the power shaft rotate synchronously; and, the travel of the component which is driven by the tubular motor is divided into a plurality of nodes by the code disc, and the component which is driven by the tubular motor can be sensed on any node by the sensor, so that the specific position of the component which is driven by the tubular motor can be sensed conveniently through the code disc in the operation of the tubular motor, and the usability of the tubular motor is optimized.

When the power off suddenly happened during the operation of the component which is driven by the tubular motor, the encoder may correctly identify the specific position where the component which is driven by the tubular motor is., When the power is on, the error action of the tubular motor may be effectively avoided, thus the service life of the tubular motor is prolonged.

When the component which is driven by the tubular motor is moved manually, the movement of the component which is driven by the tubular motor will drive the input shaft to rotate, thereby drive the power shaft to rotate; therefore, after the component which is driven by the tubular motor is moved manually, the encoder still can correctly identify the position of the component which is driven by the tubular motor, thus the usability of the tubular motor is further optimized.

### BRIEF DESCRIPTION OF THE DRAWINGS

FIG. 1 is an axonometric drawing of an absolute encoder of a tubular motor of the disclosure.
FIG. 2 is a front view of an absolute encoder of a tubular motor of the disclosure.
FIG. 3 is a top view of FIG. 2.
FIG. 4 is a front view of a code disc in an absolute encoder of a tubular motor of the disclosure.

### DESCRIPTION OF THE EMBODIMENTS

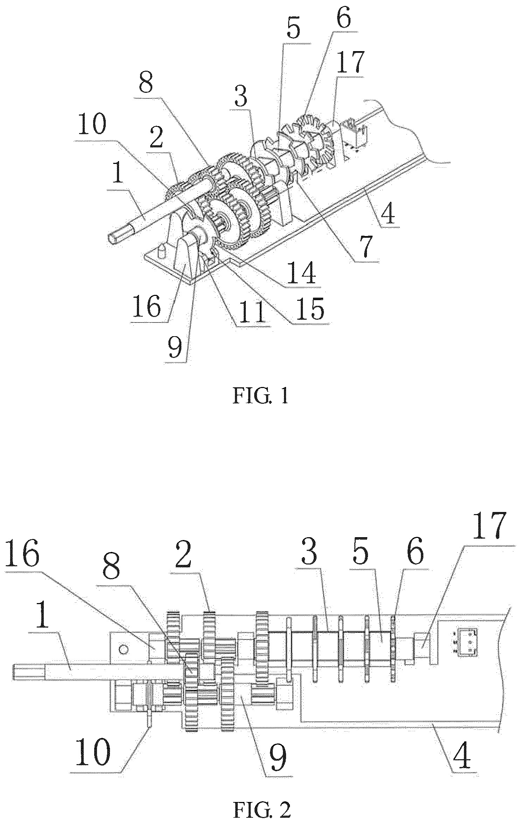

The absolute encoder of a tubular motor provided by the disclosure is described below in further detail in conjunction with the drawings. As shown in FIG. 1, FIG. 2, FIG. 3 and FIG. 4, an absolute encoder of a tubular motor includes an input shaft 1, a speed variation device 2, an encoding device 3 and a substrate 4; taking a tubular motor used for a garage roller shutter door for example, the tubular motor also drives the roller shutter door to move while driving the input shaft 1 to synchronously rotate; the encoding device 3 includes a power shaft 5 and a code disc 6 arranged on the power shaft 5, wherein the code disc 6 is sleeved on the power shaft 5 and synchronously rotates along with the power shaft 5, the input shaft 1 transmits power to the power shaft 5 after experiencing the speed variation by the speed variation device 2, supposing the input shaft 1 needs to rotate for n circles when an apparatus which is driven by the input shaft 1 moves from one limiting position to another, the speed variation device 2 makes the transmission ratio of the input shaft 1 to the power shaft 5 be n:1; that is to say, the tubular motor needs to rotate for n circles when the roller shutter door driven by the tubular motor moves from the highest to the lowest or when the roller shutter door driven by the tubular motor moves from the lowest to the highest, during this process, the input shaft 1 of the tubular motor also synchronously rotates for n circles, however, the transmission ratio of the speed variation device 2 makes the input shaft 1 rotate for n circles while the power shaft 5 just rotate for 1 circle, so that the encoder senses the correct position of the roller shutter door conveniently; the speed variation device 2 is a gear variator, and a drive wheel 8 which is engaged with a gear of the gear variator is arranged on the input shaft 1. The gear variator has advantages of lower noise and more accurate transmission ratio, thus improve the precision of the encoder.

Refer to FIG. 1, FIG. 2 and FIG. 3, each code disc 6 arranged on the power shaft 5 is provided with a respective number of sensing parts, and, after all code discs 6 are fixed on the power shaft 5, each code disc 6 is arranged in an ascending or descending order according to the number of sensing parts on the code disc 6 based on a formula a=x^{y}, where a is the number of the sensing parts on the code disc 6, x is an integer greater than or equal to 2, y is an integer greater than or equal to 1; a sensor 7 which is matched with the sensing part for collecting signals is arranged at each position on the substrate 4 corresponding to each code disc 6, and the sensor 7 is fixed on the substrate 4 through a bolt; taking the condition that five code discs 6 are arranged on the power shaft 5 for example, after all code discs 6 are fixed on the power shaft 5, the number of sensing parts on each code disc 6 is 2, 4, 8, 16 and 32 in turn; this arrangement enables the code disc 6 to evenly deploy 32 nodes on the travel of the roller shutter door; the roller shutter door can be sensed by the encoder when moving to any node, so that the error action of the tubular motor is effectively avoided and the usability of the tubular motor is optimized. The number of sensing parts on each code disc 6 is set based on x=2, that benefits for the communication between the sensor 7 and a controller controlling the tubular motor.

During the actual use process of the above embodiment, the sensor 7 communicates with the controller controlling the tubular motor to operate, and the signal collected by the sensor 7 is transmitted to the controller and processed by the controller, so that the controller senses the specific position of the roller shutter door according to the signal collected by the sensor 7; the sensor 7 and the controller both are devices available in existing technologies; the error action of the tubular motor is effectively avoided and the usability of the tubular motor is optimized

The principle for collecting signals of sensor 7 is that: the input shaft 1 drives through the speed variation device 2 the power shaft 5 to rotate, five code discs 6 mounted on the power shaft 5 all are provided with a sensing part, moreover, the number of sensing parts on each code disc 6 is 2, 4, 8, 16 and 32 in turn, thus, the encoder will evenly deploy 32 nodes on the travel of the roller shutter door; since the power shaft 5 only needs to rotate for one circle when the roller shutter door moves from one limiting position to another, the nodes actually are the sensing parts arranged on the code disc 6; the sensor 7 is matched with the sensing part for collecting signals, so that the encoder may sense the specific position of the roller shutter door when the power shaft 5 rotates.

As a preferred embodiment of the above embodiment, refer to FIG. 1, FIG. 2 and FIG. 3, the speed variation device 2 includes an intermediate shaft 9 driven by the input shaft 1, a disc body 10 which is provided with a sensing body is arranged on the intermediate shaft 9, and a sensing device 11 which is matched with the sensing body for collecting a rotation state of the intermediate shaft 9 is arranged at a position on the substrate 4 corresponding to the disc body, the sensing device 11 is fixed on the substrate 4 through a bolt, the rotation state of the intermediate shaft 9 directly reflects the rotation state of the input shaft 1, while the rotation state of the input shaft 1 also directly reflects the rotation state of the tubular motor; the rotation state of the intermediate shaft 9 refers to the rotation direction and rotation speed of the intermediate shaft 9 and whether the intermediate shaft 9 rotates at a constant speed or not; the sensing device 11 communicates with the controller; this arrangement makes the sensing device 11 capable of sensing the rotation direction and rotation speed of the tubular motor and whether the tubular motor rotates at a constant speed or not, and all these implementations optimizes the usability of the tubular motor. When the tubular motor does not rotate at a constant speed, it is indicated that the roller shutter door is stuck by a foreign matter; at this time, the controller gives alarm information to prompt a user to process.

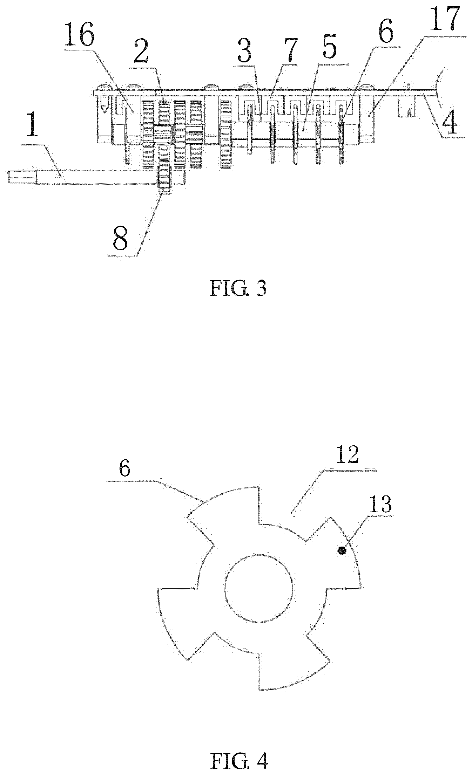

The specific structure of the code disc 6 in the above embodiment may be as follows: referring to FIG. 4, a groove 12 which is recessed into the code disc 6 along the radial direction of the code disc 6 is opened on the code disc 6, the groove 12 runs through the code disc 6 along the axial direction of the code disc 6, the sensing part is the groove 12 which is arranged on the code disc 6 and a protrusion 13 which is positioned on the code disc 6 relative to the groove 12; the groove 12 and the protrusion 13 are relative to each other; in fact it is equivalent that grooves 12 are opened on the code disc 6; this arrangement makes the code disc 6 simple in structure, the position of the sensing part accurate and the precision of the encoder improved.

The structure of the code disc 6 also may be as follows: the sensing part is a sensing block stuck on the code disc 6. The sensing block is stuck on the code disc 6 to form the sensing part; this arrangement reduces the manufacturing cost of the code disc 6. The sensing block also may be fixed on the code disc 6 through other connection ways, for example through thread connection and the like.

The specific structure of the disc body 10 in the above embodiment may be as follows: at least two sensing bodies are arranged on the disc body 10; the higher the number of the sensing bodies, the more signals will be collected by the sensing device 11, thus the sending device 11 will have higher precision.; taking the condition that six sensing bodies are arranged on the disc body 10 for example, a groove body 14 which is recessed into the disc body 10 along the radial direction of the disc body 10 is opened on the disc body 10, the groove body 14 runs through the disc body 10 along the axial direction of the disc body 10, and the sensing body is the groove body 14 which is arranged on the disc body 10 and a protrusion 15 which is positioned on the disc body 10 relative to the groove body 14; the groove body 14 and the protrusion 15 are relative to each other; in fact it is equivalent that groove bodies 14 are opened on the disc body 10; this arrangement improves the sensing precision of the sensing device 11.

The structure of the disc body 10 also may be as follows: the sensing body is a sensing sheet stuck on the disc body 10. This reduces the manufacturing precision of the disc body 10.

The intermediate shaft 9 and the power shaft 5 in the above embodiment both should be reliably connected with the substrate 4; referring to FIG. 1, FIG. 2 and FIG. 3, a lug 16 which supports the intermediate shaft 9 is arranged on the substrate 4, and a convex plate 17 which supports the power shaft 5 is further fixed on the substrate 4. The substrate 4 refers to a structure used for fixing the speed variation device 2 and the encoding device 3, and may be a shell of the tubular motor, etc. When the speed variation device 2 is a gear variator, to facilitate the arrangement of the lug 16, the final gear of the gear variator should be positioned between one of the lugs 16 and the power shaft 5, so as to avoid the interference between the power shaft 5 and the lug 16.

The above are preferred embodiments of the disclosure and are intended to embody the outstanding technical effects and advantages of the disclosure, but to limit the technical scheme of the disclosure. Those who skilled in the art should understand that all modifications, variations or substitute technical features made according to the technical content of the disclosure shall be covered in the technical scope claimed by claims appended in the disclosure.

## Claims

1. An absolute encoder of tubular motor, **characterized in that**: the absolute encoder comprises an input shaft (1), a speed variation device (2), an encoding device (3) and a substrate (4), wherein the encoding device (3) comprises a power shaft (5) and a code disc (6) arranged on the power shaft (5), the input shaft (1) transmits power to the power shaft (5) after experiencing the speed variation by the speed variation device (2), supposing the input shaft (1) needs to rotate for n circles when an apparatus which is driven by the input shaft (1) moves from one limiting position to another, the speed variation device (2) makes the transmission ratio of the input shaft (1) to the power shaft (5) be n:1; each code disc (6) arranged on the power shaft (5) is provided with a respective number of sensing parts, and, after all code discs (6) are fixed on the power shaft (5), each code disc (6) is arranged in an ascending or descending order according to the number of sensing parts on the code disc (6) based on a formula a=x^{y}, where a is the number of the sensing parts on the code disc (6), x is an integer greater than or equal to 2, y is an integer greater than or equal to 1; and a sensor (7) which is matched with the sensing part for collecting signals is arranged at each position on the substrate (4) corresponding to each code disc (6).

2. The absolute encoder of tubular motor according to claim 1, **characterized in that**: the speed variation device (2) is a gear variator, and a drive wheel (8) which is engaged with a gear of the gear variator is arranged on the input shaft (1).

3. The absolute encoder of tubular motor according to claim 1 or 2, **characterized in that**: the speed variation device (2) comprises an intermediate shaft (9) driven by the input shaft (1), a disc body (10) which is provided with a sensing body is arranged on the intermediate shaft (9), and a sensing device (11) which is matched with the sensing body for collecting a rotation state of the intermediate shaft (9) is arranged at a position on the substrate (4) corresponding to the disc body (10).

4. The absolute encoder of tubular motor according to claim 3, **characterized in that**: a groove (12) which is recessed into the code disc (6) along the radial direction of the code disc (6) is opened on the code disc (6), the groove (12) runs through the code disc (6) along the axial direction of the code disc (6), and the sensing part is the groove (12) which is arranged on the code disc (6) and a protrusion (13) which is positioned on the code disc (6) relative to the groove (12).

5. The absolute encoder of tubular motor according to claim 3, **characterized in that**: the sensing part is a sensing block stuck on the code disc (6).

6. The absolute encoder of tubular motor according to claim 3, **characterized in that**: at least two sensing bodies are arranged on the disc body (10).

7. The absolute encoder of tubular motor according to claim 6, **characterized in that**: the sensing body is a sensing sheet stuck on the disc body (10); or, a groove body (14) which is recessed into the disc body (10) along the radial direction of the disc body (10) is opened on the disc body (10), the groove body (14) runs through the disc body (10) along the axial direction of the disc body (10), and the sensing body is the groove body (14) which is arranged on the disc body (10) and a protrusion (15) which is positioned on the disc body (10) relative to the groove body (14).

8. The absolute encoder of tubular motor according to claim 4, **characterized in that**: five code discs (6) are arranged on the power shaft (5), and, after all code discs (6) are fixed on the power shaft (5), the number of sensing parts on each code disc (6) is 2, 4, 8, 16 and 32 in turn.

9. The absolute encoder of tubular motor according to claim 7, **characterized in that**: six sensing bodies are arranged on the disc body (10).

10. The absolute encoder of tubular motor according to claim 1, **characterized in that**: a lug (16) which supports the intermediate shaft (9) is arranged on the substrate (4), and a convex plate (17) which supports the power shaft (5) is further fixed on the substrate (4).
